# EUROPEAN PATENT APPLICATION

(11) **EP 2 524 900 A1**
(43) Date of publication of application: **21.11.2012**
(21) Application number: 12168442.7
(22) Date of filing: 17.05.2012
(51) Int. Cl.: C02F 1/68, B67D 1/00, B01F 3/04

(54) **Device for carbonating drinking water with carbon dioxide**

(30) Priority: 18.05.2011 IT MI20110170 U
(71) Applicant: Fluid-O-Tech S.r.l., 20094 Corsico (MI) (IT)
(72) Inventor: Gambaro, Eric, 16128 Genova (GE) (IT); Pastorino, Claudio, 16014 Campomorone (GE) (IT)
(74) Representative: Ottazzo, Marco Francesco Agostino

(57) **Abstract**

A device (10) for carbonating drinking water with carbon dioxide (CO2) is described, comprising a main body (12) configured to house a first positive displacement pump (14) and a second positive displacement pump (16) connected in series. The main body (12) also comprises at least one inlet duct (18) for the water to be carbonated, a first inlet duct (22) for the carbon dioxide (CO2), positioned upstream of the first positive displacement pump (14), a second inlet duct (28) for the carbon dioxide (CO2), positioned downstream of the first positive displacement pump (14) and upstream of the second positive displacement pump (16), and at least one outlet duct (42) for the carbonated water. A first step of carbonating the water with carbon dioxide (CO₂) takes place in the thrusting step inside the chamber of the first positive displacement pump (14) and a second step of carbonating the water with carbon dioxide (CO₂) takes place in the thrusting step inside the chamber of the second positive displacement pump (16).

## Description

The present invention refers to a device for carbonating drinking water with carbon dioxide or, in other words, to a device capable of adding carbon dioxide (CO₂) to water.

The treatment of drinking water at the point of use is a reality under great expansion, present in many countries irrespective of the condition of the water distribution systems, be they good or be they insufficient to ensure a standard comparable to that of bottled water.

The task of units and system for refining drinking water is that of safely ensuring the quality of water at the point of use and, at the same time, improving the chemical and physical characteristics of water intended for human consumption.

According to the users' requirements, who for example require very light water rather than fizzy water and so on, different types of treatment therefore exist that exploit different principles. Among the refinement systems there are filtration systems, which can base their action on physical principles, on chemical principles, on simple mechanical actions, or on a combination of such principles. There are also apparatuses known as drink makers (or even carbonators), which are able to make tap water fizzy by enriching it with carbon dioxide (CO₂) contained in suitable cartridges.

In order to add carbon dioxide to drinking water, so as to obtain fizzy water (or so-called "soda water") intended for human consumption, carbonation is normally carried out, i.e. dissolving carbon dioxide in water.

Levels that are pleasing to the human palate for soda water are usually comprised between 3÷3.5 volumes of gas (CO₂), at a temperature of about 6°C, for each individual volume of water. At low temperatures (6°C), with pressures of around 3.5 bar, there is indeed good carbonation of the water as a function of the greater specific contact surface that can be obtained and of the contact time. In a pressurised container, at low temperature and with a free surface that separates water and carbon dioxide, an excellent fizzy water is produced in a time of about 10÷12 hours.

Systems for carbonating drinking water with carbon dioxide to make it suitable for human consumption as a drink are different. A typical carbonation system comprises a container in which suitable passages are formed, so that there is an inlet for the carbon dioxide, an inlet for the water, an outlet for the fizzy water and suitable instruments for checking the water level. Suitable probes are able to actuate a pump that pushes the water inside the container through a thin nozzle, overcoming the counter-pressure of the carbon dioxide. The water is then carbonated by nebulisation, or by perforation of the free surface by the jet of water in inlet, consequently increasing the contact surface.

Another type of carbonation system provides the presence of recirculation pumps, which draw water from a tank to then introduce it back into the same tank. In some cases, the carbon dioxide is present inside the tank, which in these cases performs the function of a carbonator, whereas in other cases the carbon dioxide is supplied through a recirculation circuit.

Known systems for carbonating drinking water thus require the presence of numerous components (water storage containers, recirculation circuits, etc.) and are, consequently, particularly complicated, expensive and bulky.

The general purpose of the present invention is therefore that of making a device for carbonating drinking water with carbon dioxide that is able to solve the aforementioned drawbacks of the prior art in an extremely simple, cost-effective and particularly functional manner.

In detail, a purpose of the present invention is that of making a device for carbonating drinking water with carbon dioxide that is small in size, not foreseeing either storage tanks, or water recirculation circuits with relative pumps.

Another purpose of the invention is to make a device for carbonating drinking water with carbon dioxide that is able to operate with operating pressures that are not particularly high, whilst still ensuring optimal conditions to obtain a good carbonation of the water.

A further purpose of the invention is to make a device for carbonating drinking water with carbon dioxide that ensures a continuous flow of carbonated water.

These purposes according to the present invention are accomplished by making a device for carbonating drinking water with carbon dioxide as outlined in claim 1.

Further characteristics of the invention are highlighted by the dependent claims, which are an integral part of the present description.

The characteristics and advantages of a device for carbonating drinking water with carbon dioxide according to the present invention will become clearer from the following description, given as an example and not for limiting purposes, referring to the attached schematic drawings in which:

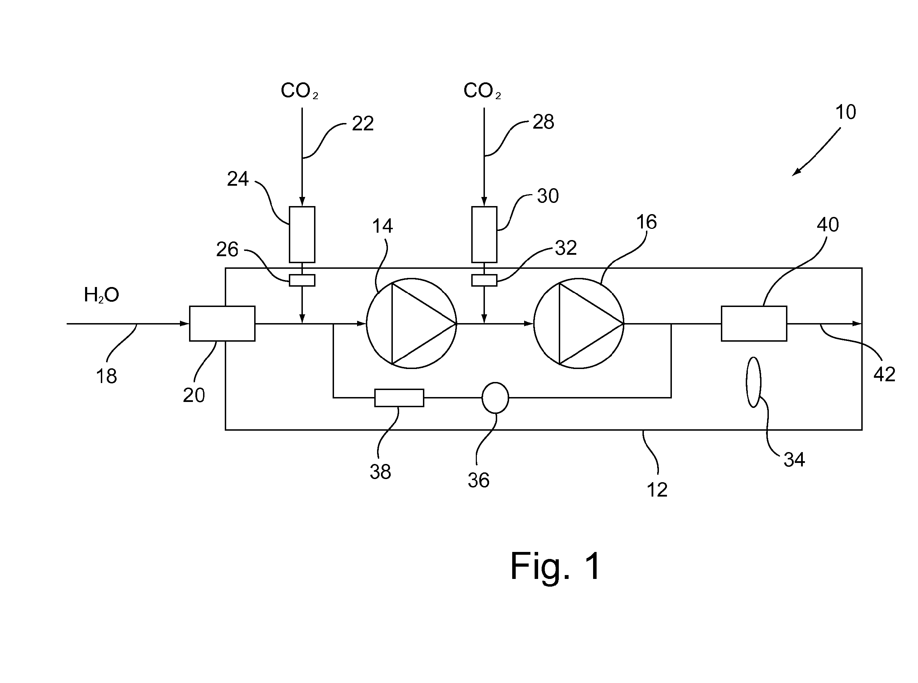

figure 1 is a totally schematic view that illustrates the essential components and the operation of a device for carbonating drinking water with carbon dioxide according to the present invention;

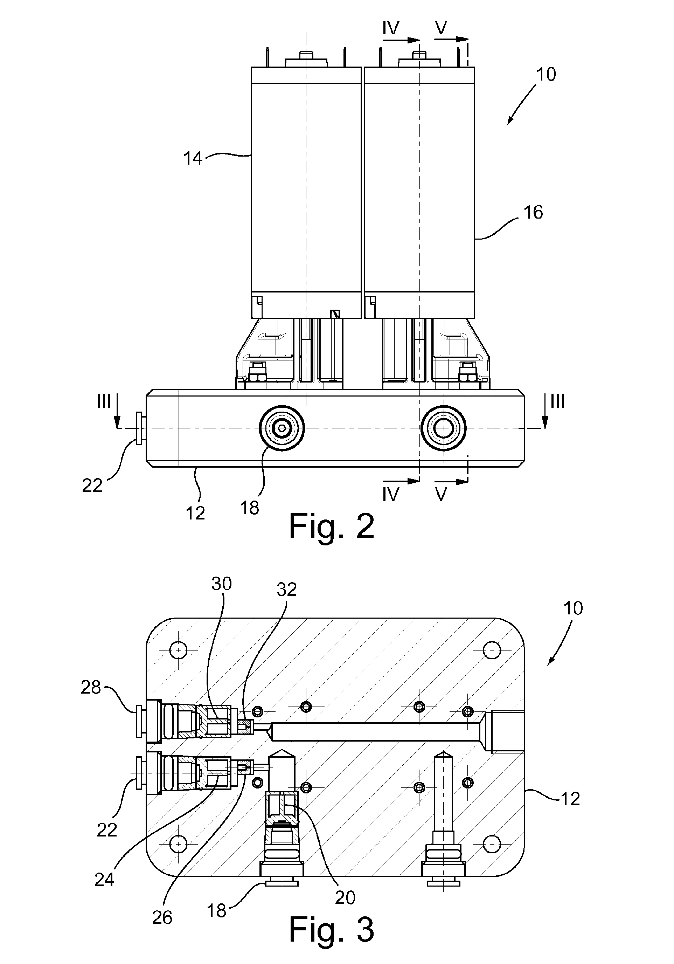

figure 2 is a side elevational view that illustrates a preferred embodiment of the device for carbonating drinking water with carbon dioxide according to the present invention;
figure 3 is a section view, obtained along the line III-III of figure 2, of the device for carbonating drinking water with carbon dioxide according to the present invention;

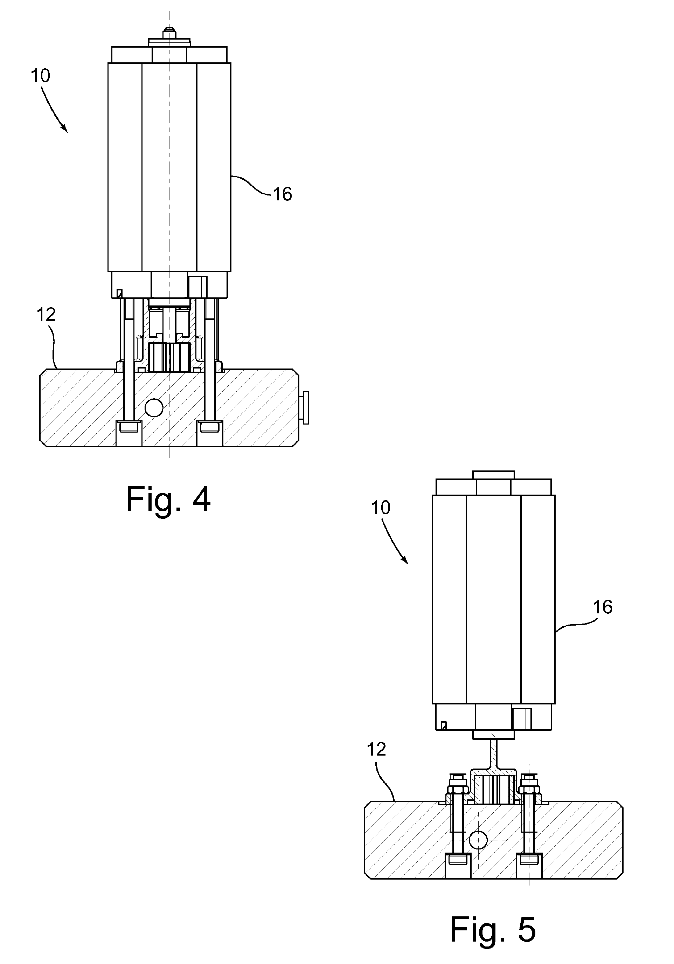

figure 4 is another section view, obtained along the line IV-IV of figure 2, of the device for carbonating drinking water with carbon dioxide according to the present invention; and
figure 5 is a further section view, obtained along the line V-V of figure 2, of the device for carbonating drinking water with carbon dioxide according to the present invention.

With reference to the figures, a device for carbonating drinking water with carbon dioxide according to the present invention is shown, wholly indicated with reference numeral 10.

The device 10 comprises a main body 12 that is small in size, without the water storage tank that conventional carbonation devices are usually equipped with. The main body 12 is configured to house a first positive displacement pump 14 and a second positive displacement pump 16 connected in series, both of the positive displacement pumps 14 and 16 being advantageously of the geared type.

The main body 12 of the device 10 also houses:
- at least one inlet duct 18 for the water to be carbonated, protected by a non-return valve 20;
- a first inlet duct 22 for the carbon dioxide (CO₂), protected by a non-return valve 24 and provided with a first flow reducing nozzle 26. The first inlet duct 22 for the carbon dioxide (CO₂) is positioned upstream of the first gear pump 14;
- a second inlet duct 28 for the carbon dioxide (CO₂), protected by a non-return valve 30 and provided with a second flow reducing nozzle 32. The second inlet duct 28 for the carbon dioxide (CO₂) is positioned downstream of the first gear pump 14 and upstream of the second gear pump 16;
- a pressure switch 34.

The water to be carbonated, introduced into the device 10 through the duct 18, can be taken directly from the water grid, whereas the carbon dioxide fed through the relative inlet ducts 22 and 28 can be taken from suitable cartridges (not shown) with a suitable pressure reducer.

Inside the main body 12 of the device 10 a bypass circuit 36 can also be installed having its inlet point downstream of the second gear pump 16 and its outlet point upstream of the first gear pump 14. The bypass circuit 36 can also be provided with a respective non-return valve 38. The device 10 is completed by a flow compensator/regulator 40 of the carbonated water, positioned on the outlet duct 42 for the carbonated water and downstream of the two gear pumps 14 and 16.

In order to be able to operate at the optimal temperatures for the carbonation of carbon dioxide in water, the device 10 must be advantageously positioned in a cold place, i.e. refrigerated at a temperature comprised within the range between 4°C and 10°C. Alternatively or in addition, the water to be carbonated in inlet into the device 10 through the duct 18 must be fed at a temperature comprised within the range between 4°C and 10°C, preferably equal to about 6°C.

The pressure of the carbon dioxide in inlet into the device 10 is regulated by a pressure reducer (not shown) positioned upstream of the inlet ducts 22 and 28 for the carbon dioxide, so that the pressure of the water to be carbonated entering into the device 10 through the duct 18 is less than the pressure of the carbon dioxide by a value comprised between 1 and 2 bar, as a function of the level of carbonation to be obtained.

Upon entry of water to be carbonated through the duct 18, the pressure switch 34 actuates the two gear pumps 14 and 16. The carbon dioxide in inlet into the device 10 through the first inlet duct 22 has a greater pressure than the pressure of the water to be carbonated, but it is dragged by the flow due to its limited amount with respect to the amount of water to be carbonated. The first flow reducing nozzle 26 is able to dose (limit) such an amount of carbon dioxide.

Inside the chamber of the first gear pump 14 a first partial carbonation of the water takes place, promoted by the greater pressure of the carbon dioxide and the large specific surface. In outlet from the first gear pump 14 the water is once again added to with carbon dioxide through the second inlet duct 28, through an analogous system consisting of a limited flow of carbon dioxide at a greater pressure than that of the partially carbonated water transiting between the first gear pump 14 and the second gear pump 16. In this case it is the second flow reducing nozzle 32 that doses (limits) such an amount of carbon dioxide.

Inside the chamber of the second gear pump 16 the carbonation level of the water once again increases, through the same principle forming the basis of the first partial carbonation inside the first gear pump 14. At the outlet of the second gear pump 16 all or part of the water thus carbonated can be sent back upstream of the first gear pump 14 through the bypass circuit 36, so as to once again undergo the entire carbonation process described up to now.

The flow compensator/regulator 40 has the task of reducing the flow of water carbonated with carbon dioxide in outlet from the device 10, so as to create the counter-pressure necessary to ensure that in the chambers of the two gear pumps 14 and 16 the pressure is high, in other words of the order of 2.5÷3.5 bar, and at the same time to ensure a regular motion of the flow so as to maintain the level of carbonation reached. In other words, the flow compensator/regulator 40, positioned on the outlet duct 42 for the carbonated water, has the purpose of regulating the flow and of ensuring a smooth motion of the carbonated water in outlet from the device 10, maintaining the achieved carbonation level and contemporarily creating a proper optimal counter-pressure as a function of the pressure of the water in inlet.

It has thus been seen that the device for carbonating drinking water with carbon dioxide according to the present invention achieves the purposes outlined earlier. In particular, the device for carbonating drinking water with carbon dioxide according to the present invention:
- uses gear pumps and flow reducer of carbon dioxide so as to have counter-pressures that are not high;
- does not provide either storage tanks or water recirculation systems in the carbonation step, thus being small in size;
- is able to carbonate the water with carbon dioxide in the thrusting step inside the gears of the pumps, so as to ensure a continuous flow of carbonated water;
- uses the flow reducers to dose the amount of carbon dioxide inside the chambers of the pumps;
- can be provided with a partial bypass that sends at least part of the carbonated water back upstream of the pumps, further increasing the carbonation level.

The device for carbonating drinking water with carbon dioxide of the present invention thus conceived can in any case undergo numerous modifications and variants, all of which are covered by the same innovative concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Device (10) for carbonating drinking water with carbon dioxide (CO₂), comprising a main body (12) configured to house a first positive displacement pump (14) and a second positive displacement pump (16) connected in series, the main body (12) also comprising:
- at least one inlet duct (18) for the water to be carbonated;
- a first inlet duct (22) for the carbon dioxide (CO₂), positioned upstream of the first positive displacement pump (14);
- a second inlet duct (28) for the carbon dioxide (CO₂), positioned downstream of the first positive displacement pump (14) and upstream of the second positive displacement pump (16); and
- at least one outlet duct (42) for the carbonated water,
wherein a first step of carbonating the water with carbon dioxide (CO₂) takes place in the thrusting step inside the chamber of the first positive displacement pump (14) and a second step of carbonating the water with carbon dioxide (CO₂) takes place in the thrusting step inside the chamber of the second positive displacement pump (16).

2. Device (10) according to claim 1, **characterised in that** the first inlet duct (22) and the second inlet duct (28) for the carbon dioxide (CO₂) are respectively provided with a first flow reducing nozzle (26) and with a second flow reducing nozzle (32) capable of dosing the amount of carbon dioxide (CO₂) in inlet respectively into the first positive displacement pump (14) and into the second positive displacement pump (16).

3. Device (10) according to claim 1 or 2, **characterised in that** inside the main body (12) a bypass circuit (36) is also installed having its inlet point downstream of the second positive displacement pump (16) and its outlet point upstream of the first positive displacement pump (14), the bypass circuit (36) sending back all or part of the carbonated water upstream of the first positive displacement pump (14) to further increase its carbonation level.

4. Device (10) according to any one of claims 1 to 3, **characterised in that** it comprises a pressure reducer positioned upstream of the first inlet duct (22) and of the second inlet duct (28) for the carbon dioxide (CO₂), the pressure reducer regulating the pressure of the carbon dioxide (CO₂) entering into the device (10) so that the pressure of the water to be carbonated entering through the relative inlet duct (18) is less than the pressure of the carbon dioxide (CO₂).

5. Device (10) according to any one of claims 1 to 4, **characterised in that** it comprises a pressure switch (34) capable of actuating the first positive displacement pump (14) and the second positive displacement pump (16) upon the inlet of water to be carbonated through the relative inlet duct (18).

6. Device (10) according to any one of claims 1 to 5, **characterised in that** it comprises a flow compensator/regulator (40) of the carbonated water, positioned on the outlet duct (42) for the carbonated water and downstream of the first positive displacement pump (14) and of the second positive displacement pump (16), the flow compensator/regulator (40) operating to reduce the flow of carbonated water in outlet from the device (10), so as to create the counter-pressure necessary to ensure that in the chambers of the first positive displacement pump (14) and of the second positive displacement pump (16) the pressure is high, and at the same time ensure regular motion of the flow so as to maintain the level of carbonation reached.

7. Device (10) according to any one of claims 1 to 6, **characterised in that** the inlet duct (18) for the water to be carbonated, the first inlet duct (22) for the carbon dioxide (CO₂), the second inlet duct (28) for the carbon dioxide (CO₂) and/or the bypass circuit (36) are provided with respective non-return valves (20; 24; 30; 38).

8. Device (10) according to any one of claims 1 to 7, **characterised in that** the first positive displacement pump (14) and the second positive displacement pump (16) are positive displacement pumps of the geared type.
